# EUROPEAN PATENT APPLICATION

(11) **EP 4 730 862 A1**
(43) Date of publication of application: **22.04.2026**
(21) Application number: 24850659.4
(22) Date of filing: 06.06.2024
(51) Int. Cl.: H04W 28/24

(54) **SERVICE TRANSMISSION METHOD AND APPARATUS**

(30) Priority: 07.08.2023 CN 202310993298
(71) Applicant: Huawei Technologies Co., Ltd., Shenzhen, Guangdong 518129 (CN)
(72) Inventor: FU, Yu, Shenzhen, Guangdong 518129 (CN); QIN, Yi, Shenzhen, Guangdong 518129 (CN); CAO, Youlong, Shenzhen, Guangdong 518129 (CN); XU, Rui, Shenzhen, Guangdong 518129 (CN)
(74) Representative: Pfenning, Meinig & Partner mbB
(86) International application number: PCT/CN2024/097716
(87) International publication number: WO 2025/031007

(57) **Abstract**

A service transmission method and apparatus are disclosed. The service transmission method includes: An application function network element indicates N QoS flows or N PDU sets to an access network device. The access network device may select, from the N QoS flows or the N PDU sets based on a plurality of factors such as a current network status and a channel status, M QoS flows or M PDU sets that can ensure a current service transmission delay, and indicate the M QoS flows or the M PDU sets to the application function network element. The application function network element selects, from the M QoS flows or the M PDU sets, a QoS flow or a PDU set used for service transmission. The service transmission delay can be ensured by using the service transmission method in embodiments of this application.

## Description

This application claims priority to Chinese Patent Application No. 202310993298.X, filed with the China National Intellectual Property Administration on August 7, 2023 and entitled "SERVICE TRANSMISSION METHOD AND APPARATUS", which is incorporated herein by reference in its entirety.

### TECHNICAL FIELD

This application relates to the field of communication technologies, and more specifically, to a service transmission method and apparatus.

### BACKGROUND

In recent years, with continuous development of 5G communication systems, a data transmission capacity is increasingly large, and a data transmission delay is increasingly low. A rapid increase in a data transmission rate in a communication process has made a real-time video transmission service become one of the core services in a current network. For example, current real-time video transmission services include services such as clouding gaming (clouding gaming, CG), extended reality (extended reality, XR), and the like.

To use a high-speed stable network and meet requirements of lightweight and mobility of a terminal device, content of a real-time video transmission service is put on cloud. The terminal device is connected to a network by using an access network device, and obtains the service content from the cloud. A service processing time on the cloud varies with a quantity of tasks to be processed. Therefore, a problem of an excessively long delay due to an excessively large quantity of tasks to be processed may occur on the cloud, and a service transmission delay cannot be ensured.

### SUMMARY

This application provides a service transmission method and apparatus to ensure a service transmission delay.

According to a first aspect, a service transmission method is provided. The method may be performed by an application function network element, or may be performed by a module (for example, a chip or a circuit) in an application function network element, or may be performed by a logical node, a logical module, or software that can implement all or some functions of an application function network element. This is not limited in this application.

The method includes: sending first information to an access network device; and receiving second information from the access network device. The first information indicates N quality of service (quality of service, QoS) flows. The second information indicates M QoS flows. The M QoS flows belong to the N QoS flows. Packet delay budgets (packet delay budget, PDB) corresponding to at least two of the N QoS flows are different, and/or bit rates corresponding to at least two of the N QoS flows are different. Service transmission is performed based on a first QoS flow, where the first QoS flow belongs to the M QoS flows.

Alternatively, the method includes: sending first information to an access network device; and receiving second information from the access network device. The first information indicates N protocol data unit (protocol data unit, PDU) sets. The second information indicates M PDU sets. The M PDU sets belong to the N PDU sets, and PDU set delay budgets (PDU set delay budget, PSDB) corresponding to at least two of the N PDU sets are different. Service transmission is performed based on a first PDU set, where the first PDU set belongs to the M PDU sets.

M is greater than or equal to 1, N is greater than or equal to M, and M and N are positive integers.

According to the foregoing method, the application function network element may provide, for the access network device, the N QoS flows or the N PDU sets supported by the application function network element. The access network device determines, based on a current network status or the like, at least one QoS flow or PDU set that can ensure a current service transmission delay. Using the at least one QoS flow or PDU set for service transmission can effectively ensure the service transmission delay and improve user experience.

With reference to the first aspect, in some implementations of the first aspect, the method further includes: receiving fourth information from the access network device, where the fourth information indicates an effective time of the first QoS flow or the first PDU set.

For example, the "effective time" may be a start time of service transmission.

According to the foregoing method, the application function network element may learn when to use the first QoS flow or the first PDU set for service transmission, so that a service transmission delay is ensured on time.

With reference to the first aspect, in some implementations of the first aspect, when M is greater than 1, the method further includes: receiving third information from the access network device, where the third information indicates a use order of the M QoS flows or PDU sets. That service transmission is performed based on the first QoS flow or the first PDU set includes: Service transmission is determined, based on the use order, to be performed based on the first QoS flow or the first PDU set.

Specifically, the use order of the M QoS flows or the M PDU sets that is indicated by the third information may be understood as a priority order of the M QoS flows or the M PDU sets that is recommended by the access network device for the application function network element. For example, the use order of the M QoS flows is a QoS flow #1, a QoS flow #2, ..., and a QoS flow #M. When identifying that the QoS flow #1 cannot be used for service transmission, the application function network element selects the QoS flow #2 for service transmission. In this case, the QoS flow #2 may be considered as the first QoS flow. Alternatively, when identifying that the QoS flow #1 can be used for service transmission, the application function network element selects the QoS flow #1 for service transmission. In this case, the QoS flow #1 may be considered as the first QoS flow. A QoS flow selected by the application function network element from the M QoS flows for service transmission is not limited in this application.

Alternatively, when M = 1, the first QoS flow is the M QoS flows indicated by the second information, and the first PDU set is the M PDU sets indicated by the second information.

According to the foregoing method, the application function network element comprehensively considers a plurality of factors and selects a QoS flow or a PDU set whose service transmission can be completed at an effective time, to ensure a service transmission delay and stability.

Each QoS flow includes at least one PDU set, and each of the at least one PDU set corresponds to at least one piece of the following information:
a PSDB of the PDU set and importance of the PDU set.

With reference to the first aspect, in some implementations of the first aspect, when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, importance of at least one PDU set in the first QoS flow is greater than importance of a PDU set in the second QoS flow, and the second QoS flow is a QoS flow used for service transmission before the first QoS flow.

Specifically, importance of a PDU set included in the first QoS flow may be greater than importance of a PDU set in the second QoS flow, or importance of some PDU sets included in the first QoS flow may be greater than importance of a PDU set in the second QoS flow, or importance of all PDU sets included in the first QoS flow may be greater than importance of a PDU set in the second QoS flow. This is not limited in this application. A PDU set included in the first QoS flow may be a PDU set carrying an instantaneous decoder refresh (instantaneous decoder refresh, IDR) frame.

Specifically, the second QoS flow may be one QoS flow used for service transmission before the first QoS flow, or may be p QoS flows used for service transmission before the first QoS flow. This is not limited in this application. p is a positive integer greater than 1.

Specifically, the second QoS flow may be one or more QoS flows used for service transmission before the first QoS flow. When the second QoS flow is a plurality of QoS flows used for service transmission before the first QoS flow, the PDB corresponding to the second QoS flow may be an average value of PDBs corresponding to the plurality of QoS flows, or may be a maximum value of PDBs corresponding to the plurality of QoS flows, or may be a minimum value of PDBs corresponding to the plurality of QoS flows. This is not limited in this application.

According to the foregoing method, when a difference between a PDB of the first QoS flow and a PDB of the second QoS flow that is previously used for service transmission is relatively large, service transmission reliability can be ensured by improving importance of a PDU set in the first QoS flow.

With reference to the first aspect, in some implementations of the first aspect, when a difference between a PSDB corresponding to the first PDU set and a PSDB corresponding to a second PDU set is greater than a third threshold, importance of the first PDU set is greater than importance of the second PDU set, and the second PDU set is a PDU set used for service transmission before the first PDU set.

Specifically, the first PDU set may be a PDU set carrying an IDR-frame.

Specifically, the second PDU set may be one PDU set used for service transmission before the first PDU set, or may be p PDU sets used for service transmission before the first PDU set. This is not limited in this application. p is a positive integer greater than 1.

Specifically, the second PDU set may be one or more PDU sets used for service transmission before the first PDU set. When the second PDU set is a plurality of PDU sets used for service transmission before the first PDU set, the PSDB corresponding to the second PDU set may be an average value of PSDBs corresponding to the plurality of PDU sets, or may be a maximum value of PSDBs corresponding to the plurality of PDU sets, or may be a minimum value of PSDBs corresponding to the plurality of PDU sets. This is not limited in this application.

According to the foregoing method, when a difference between a PSDB of the first PDU set and a PSDB of the second PDU set that is previously used for service transmission is relatively large, service transmission reliability can be ensured by improving importance of the first PDU set.

With reference to the first aspect, in some implementations of the first aspect, the method further includes: receiving seventh information from the access network device, where the seventh information indicates at least one of the first threshold, the second threshold, and the third threshold.

According to a second aspect, a service transmission method is provided. The method may be performed by an access network device, or may be performed by a module (for example, a chip or a circuit) in an access network device, or may be performed by a logical node, a logical module, or software that can implement all or some functions of an access network device. This is not limited in this application.

The method includes: receiving first information from an application function network element; and sending second information to the application function network element. The first information indicates N QoS flows. The second information indicates M QoS flows. The M QoS flows belong to the N QoS flows. PDBs corresponding to at least two of the N QoS flows are different, and/or bit rates corresponding to at least two of the N QoS flows are different. Service transmission is performed based on a first QoS flow, where the first QoS flow belongs to the M QoS flows.

Alternatively, the method includes: receiving first information from an application function network element; and sending second information to the application function network element. The first information indicates N PDU sets. The second information indicates M PDU sets. The M PDU sets belong to the N PDU sets, and PSDBs corresponding to at least two of the N PDU sets are different. Service transmission is performed based on a first PDU set, where the first PDU set belongs to the M PDU sets.

M is greater than or equal to 1, N is greater than or equal to M, and M and N are positive integers.

According to the foregoing method, the application function network element may provide, for the access network device, the N QoS flows or the N PDU sets supported by the application function network element. The access network device determines, based on a current network status or the like, at least one QoS flow or PDU set that can ensure a current service transmission delay. Using the at least one QoS flow or PDU set for service transmission can effectively ensure the service transmission delay and improve user experience.

With reference to the second aspect, in some implementations of the second aspect, the method further includes: sending fourth information to the application function network element, where the fourth information indicates an effective time of the first QoS flow or the first PDU set.

For example, the "effective time" may be a start time of service transmission.

According to the foregoing method, the application function network element may learn when to use the first QoS flow or the first PDU set for service transmission, so that a service transmission delay is ensured on time.

With reference to the second aspect, in some implementations of the second aspect, when M is greater than 1, the method further includes: sending third information to the application function network element, where the third information indicates a use order of the M QoS flows or PDU sets.

Specifically, the use order of the M QoS flows or the M PDU sets that is indicated by the third information may be understood as a priority order of the M QoS flows or the M PDU sets that is recommended by the access network device for the application function network element. For example, the use order of the M QoS flows is a QoS flow #1, a QoS flow #2, ..., and a QoS flow #M. When identifying that the QoS flow #1 cannot be used for service transmission, the application function network element selects the QoS flow #2 for service transmission. In this case, the QoS flow #2 may be considered as the first QoS flow. Alternatively, when identifying that the QoS flow #1 can be used for service transmission, the application function network element selects the QoS flow #1 for service transmission. In this case, the QoS flow #1 may be considered as the first QoS flow. A QoS flow selected by the application function network element from the M QoS flows for service transmission is not limited in this application.

Alternatively, when M = 1, the first QoS flow is the M QoS flows indicated by the second information, and the first PDU set is the M PDU sets indicated by the second information.

According to the foregoing method, the application function network element comprehensively considers a plurality of factors and selects a QoS flow or a PDU set whose service transmission can be completed at an effective time, to ensure a service transmission delay and stability.

Each QoS flow includes at least one PDU set, and each of the at least one PDU set corresponds to at least one piece of the following information:
a PSDB of the PDU set and importance of the PDU set.

With reference to the second aspect, in some implementations of the second aspect, when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, the method further includes: sending fifth information to a core network element, where the fifth information indicates an increase in importance of at least one PDU set in the first QoS flow relative to importance of a PDU set in the second QoS flow, and the second QoS flow is a QoS flow used for service transmission before the first QoS flow.

Specifically, the second QoS flow may be one QoS flow used for service transmission before the first QoS flow, or may be p QoS flows used for service transmission before the first QoS flow. This is not limited in this application. p is a positive integer greater than 1.

Specifically, the second QoS flow may be one or more QoS flows used for service transmission before the first QoS flow. When the second QoS flow is a plurality of QoS flows used for service transmission before the first QoS flow, the PDB corresponding to the second QoS flow may be an average value of PDBs corresponding to the plurality of QoS flows, or may be a maximum value of PDBs corresponding to the plurality of QoS flows, or may be a minimum value of PDBs corresponding to the plurality of QoS flows. This is not limited in this application.

According to the foregoing method, when a difference between a PDB of the first QoS flow and a PDB of the second QoS flow that is previously used for service transmission is relatively large, service transmission reliability can be ensured by indicating the core network element to improve importance of a PDU set in the first QoS flow.

With reference to the second aspect, in some implementations of the second aspect, when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, importance of at least one PDU set in the first QoS flow is greater than importance of a PDU set in the second QoS flow, and the second QoS flow is a QoS flow used for service transmission before the first QoS flow.

Specifically, importance of a PDU set included in the first QoS flow may be greater than importance of a PDU set in the second QoS flow, or importance of some PDU sets included in the first QoS flow may be greater than importance of a PDU set in the second QoS flow, or importance of all PDU sets included in the first QoS flow may be greater than importance of a PDU set in the second QoS flow. This is not limited in this application. A PDU set included in the first QoS flow may be a PDU set carrying an IDR-frame.

According to the foregoing method, when a difference between a PDB of the first QoS flow and a PDB of the second QoS flow that is previously used for service transmission is relatively large, service transmission reliability can be ensured by improving importance of a PDU set in the first QoS flow.

With reference to the second aspect, in some implementations of the second aspect, when a difference between a PSDB corresponding to the first PDU set and a PSDB corresponding to a second PDU set is greater than a third threshold, the method further includes: sending sixth information to the core network element, where the sixth information indicates an increase in importance of the first PDU set relative to importance of the second PDU set, and the second PDU set is a PDU set used for service transmission before the first PDU set.

Specifically, the second PDU set may be one PDU set used for service transmission before the first PDU set, or may be p PDU sets used for service transmission before the first PDU set. This is not limited in this application. p is a positive integer greater than 1.

Specifically, the second PDU set may be one or more PDU sets used for service transmission before the first PDU set. When the second PDU set is a plurality of PDU sets used for service transmission before the first PDU set, the PSDB corresponding to the second PDU set may be an average value of PSDBs corresponding to the plurality of PDU sets, or may be a maximum value of PSDBs corresponding to the plurality of PDU sets, or may be a minimum value of PSDBs corresponding to the plurality of PDU sets. This is not limited in this application.

According to the foregoing method, when a difference between a PSDB of the first PDU set and a PSDB of the second PDU set that is previously used for service transmission is relatively large, service transmission reliability can be ensured by indicating the core network element to improve importance of the first PDU set.

With reference to the second aspect, in some implementations of the second aspect, when a difference between a PSDB corresponding to the first PDU set and a PSDB corresponding to the second PDU set is greater than a third threshold, importance of the first PDU set is greater than importance of the second PDU set, and the second PDU set is a PDU set used for service transmission before the first PDU set.

Specifically, the first PDU set may be a PDU set carrying an IDR-frame.

According to the foregoing method, when a difference between a PSDB of the first PDU set and a PSDB of the second PDU set that is previously used for service transmission is relatively large, service transmission reliability can be ensured by improving importance of the first PDU set.

With reference to the second aspect, in some implementations of the second aspect, the method further includes: sending seventh information to the application function network element, where the seventh information indicates at least one of the first threshold, the second threshold, and the third threshold.

According to a third aspect, a service transmission method is provided. The method may be performed by a core network element and an access network device, or may be performed by a module (for example, a chip or a circuit) in a core network element and an access network device, or may be performed by a logical node, a logical module, or software that can implement all or some functions of a core network element and an access network device. This is not limited in this application.

The method includes: The access network device receives first information from an application function network element; and the access network device sends second information to the application function network element. The first information indicates N QoS flows. The second information indicates M QoS flows. The M QoS flows belong to the N QoS flows. PDBs corresponding to at least two of the N QoS flows are different, and/or bit rates corresponding to at least two of the N QoS flows are different. The access network device performs service transmission based on a first QoS flow, where the first QoS flow belongs to the M QoS flows.

Alternatively, the method includes: The access network device receives first information from an application function network element; and the access network device sends second information to the application function network element. The first information indicates N PDU sets. The second information indicates M PDU sets. The M PDU sets belong to the N PDU sets, and PSDBs corresponding to at least two of the N PDU sets are different. The access network device performs service transmission based on a first PDU set, where the first PDU set belongs to the M PDU sets.

Each QoS flow includes at least one PDU set, and each of the at least one PDU set corresponds to at least one piece of the following information:
a PSDB of the PDU set and importance of the PDU set.

When a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, the access network device sends fifth information to the core network element, where the fifth information indicates an increase in importance of at least one PDU set in the first QoS flow relative to importance of a PDU set in the second QoS flow, and the second QoS flow is a QoS flow used for service transmission before the first QoS flow. The core network element receives the fifth information from the access network device, and adjusts, based on the fifth information, the importance of the at least one PDU set in the first QoS flow to be greater than the importance of the PDU set in the second QoS flow.

M is greater than or equal to 1, N is greater than or equal to M, and M and N are positive integers.

For explanations of related content and beneficial effects of the service transmission method provided in the third aspect, refer to the service transmission method shown in the second aspect. Details are not described herein again.

According to a fourth aspect, a service transmission method is provided. The method may be performed by a core network element and an access network device, or may be performed by a module (for example, a chip or a circuit) in a core network element and an access network device, or may be performed by a logical node, a logical module, or software that can implement all or some functions of a core network element and an access network device. This is not limited in this application.

The method includes: The access network device receives first information from an application function network element; and the access network device sends second information to the application function network element. The first information indicates N QoS flows. The second information indicates M QoS flows. The M QoS flows belong to the N QoS flows. PDBs corresponding to at least two of the N QoS flows are different, and/or bit rates corresponding to at least two of the N QoS flows are different. The access network device performs service transmission based on a first QoS flow, where the first QoS flow belongs to the M QoS flows.

Alternatively, the method includes: The access network device receives first information from an application function network element; and the access network device sends second information to the application function network element. The first information indicates N PDU sets. The second information indicates M PDU sets. The M PDU sets belong to the N PDU sets, and PSDBs corresponding to at least two of the N PDU sets are different. The access network device performs service transmission based on a first PDU set, where the first PDU set belongs to the M PDU sets.

Each QoS flow includes at least one PDU set, and each of the at least one PDU set corresponds to at least one piece of the following information:
a PSDB of the PDU set and importance of the PDU set.

When a difference between a PSDB corresponding to the first PDU set and a PSDB corresponding to a second PDU set is greater than a third threshold, the access network device sends sixth information to the core network element, where the sixth information indicates an increase in importance of the first PDU set relative to importance of the second PDU set, and the second PDU set is a PDU set used for service transmission before the first PDU set. The core network element receives the sixth information from the access network device, and adjusts, based on the sixth information, the importance of the first PDU set to be greater than the importance of the second PDU set.

M is greater than or equal to 1, N is greater than or equal to M, and M and N are positive integers.

For explanations of related content and beneficial effects of the service transmission method provided in the fourth aspect, refer to the service transmission method shown in the second aspect. Details are not described herein again.

According to a fifth aspect, a service transmission apparatus is provided. The apparatus may be an application function network element, or may be a module (for example, a chip or a circuit) in an application function network element, or may be a logical node, a logical module, or software that can implement all or some functions of an application function network element. The apparatus includes an interface unit, configured to send first information to an access network device, and the interface unit is further configured to receive second information from the access network device. The first information indicates N quality of service (quality of service, QoS) flows. The second information indicates M QoS flows. The M QoS flows belong to the N QoS flows. Packet delay budgets (packet delay budget, PDB) corresponding to at least two of the N QoS flows are different, and/or bit rates corresponding to at least two of the N QoS flows are different. The apparatus further includes a processing unit, configured to perform service transmission based on a first QoS flow, where the first QoS flow belongs to the M QoS flows.

Alternatively, the apparatus includes an interface unit, configured to send first information to an access network device, and the interface unit is further configured to receive second information from the access network device. The first information indicates N protocol data unit (protocol data unit, PDU) sets. The second information indicates M PDU sets. The M PDU sets belong to the N PDU sets, and PDU set delay budgets (PDU set delay budget, PSDB) corresponding to at least two of the N PDU sets are different. The apparatus further includes a processing unit, configured to perform service transmission based on a first PDU set, where the first PDU set belongs to the M PDU sets.

M is greater than or equal to 1, N is greater than or equal to M, and M and N are positive integers.

With reference to the fifth aspect, in some implementations of the fifth aspect, the interface unit is further configured to receive fourth information from the access network device, where the fourth information indicates an effective time of the first QoS flow or the first PDU set.

With reference to the fifth aspect, in some implementations of the fifth aspect, when M is greater than 1, the interface unit is further configured to receive third information from the access network device, where the third information indicates a use order of the M QoS flows or PDU sets. That the processing unit is configured to perform service transmission based on the first QoS flow or the first PDU set includes: The processing unit is further configured to determine, based on the use order, to perform service transmission based on the first QoS flow or the first PDU set.

Each QoS flow includes at least one PDU set, and each of the at least one PDU set corresponds to at least one piece of the following information:
a PSDB of the PDU set and importance of the PDU set.

With reference to the fifth aspect, in some implementations of the fifth aspect, when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, importance of at least one PDU set in the first QoS flow is greater than importance of a PDU set in the second QoS flow, and the second QoS flow is a QoS flow used for service transmission before the first QoS flow.

With reference to the fifth aspect, in some implementations of the fifth aspect, when a difference between a PSDB corresponding to the first PDU set and a PSDB corresponding to a second PDU set is greater than a third threshold, importance of the first PDU set is greater than importance of the second PDU set, and the second PDU set is a PDU set used for service transmission before the first PDU set.

With reference to the fifth aspect, in some implementations of the fifth aspect, the interface unit is further configured to receive seventh information from the access network device, where the seventh information indicates at least one of the first threshold, the second threshold, and the third threshold.

For explanations of related content and beneficial effects of the service transmission apparatus provided in the fifth aspect, refer to the service transmission method shown in the first aspect. Details are not described herein again.

According to a sixth aspect, a service transmission apparatus is provided. The apparatus may be an access network device, or may be a module (for example, a chip or a circuit) in an access network device, or may be a logical node, a logical module, or software that can implement all or some functions of an access network device. The apparatus includes an interface unit, configured to receive first information from an application function network element, and the interface unit is further configured to send second information to the application function network element. The first information indicates N QoS flows. The second information indicates M QoS flows. The M QoS flows belong to the N QoS flows. PDBs corresponding to at least two of the N QoS flows are different, and/or bit rates corresponding to at least two of the N QoS flows are different. The apparatus further includes a processing unit, configured to perform service transmission based on a first QoS flow, where the first QoS flow belongs to the M QoS flows.

Alternatively, the apparatus includes an interface unit, configured to receive first information from an application function network element, and the interface unit is further configured to send second information to the application function network element. The first information indicates N PDU sets. The second information indicates M PDU sets. The M PDU sets belong to the N PDU sets, and PSDBs corresponding to at least two of the N PDU sets are different. The apparatus further includes a processing unit, configured to perform service transmission based on a first PDU set, where the first PDU set belongs to the M PDU sets.

M is greater than or equal to 1, N is greater than or equal to M, and M and N are positive integers.

With reference to the sixth aspect, in some implementations of the sixth aspect, the interface unit is further configured to send fourth information to the application function network element, where the fourth information indicates an effective time of the first QoS flow or the first PDU set.

With reference to the sixth aspect, in some implementations of the sixth aspect, when M is greater than 1, the interface unit is further configured to send third information to the application function network element, where the third information indicates a use order of the M QoS flows or PDU sets.

Each QoS flow includes at least one PDU set, and each of the at least one PDU set corresponds to at least one piece of the following information:
a PSDB of the PDU set and importance of the PDU set.

With reference to the sixth aspect, in some implementations of the sixth aspect, when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, the interface unit is further configured to send fifth information to a core network element, where the fifth information indicates an increase in importance of at least one PDU set in the first QoS flow relative to importance of a PDU set in the second QoS flow, and the second QoS flow is a QoS flow used for service transmission before the first QoS flow.

With reference to the sixth aspect, in some implementations of the sixth aspect, when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, importance of at least one PDU set in the first QoS flow is greater than importance of a PDU set in the second QoS flow, and the second QoS flow is a QoS flow used for service transmission before the first QoS flow.

With reference to the sixth aspect, in some implementations of the sixth aspect, when a difference between a PSDB corresponding to the first PDU set and a PSDB corresponding to a second PDU set is greater than a third threshold, the interface unit is further configured to send sixth information to a core network element, where the sixth information indicates an increase in importance of the first PDU set relative to importance of the second PDU set, and the second PDU set is a PDU set used for service transmission before the first PDU set.

With reference to the sixth aspect, in some implementations of the sixth aspect, when a difference between a PSDB corresponding to the first PDU set and a PSDB corresponding to a second PDU set is greater than a third threshold, importance of the first PDU set is greater than importance of the second PDU set, and the second PDU set is a PDU set used for service transmission before the first PDU set.

With reference to the sixth aspect, in some implementations of the sixth aspect, the interface unit is further configured to send seventh information to the application function network element, where the seventh information indicates at least one of the first threshold, the second threshold, and the third threshold.

For explanations of related content and beneficial effects of the service transmission apparatus provided in the sixth aspect, refer to the service transmission method shown in the second aspect. Details are not described herein again.

According to a seventh aspect, a service transmission apparatus is provided. The apparatus may be a core network element and an access network device, or may be a module (for example, a chip or a circuit) in a core network element and an access network device, or may be a logical node, a logical module, or software that can implement all or some functions of a core network element and an access network device. The apparatus includes an interface unit, configured to receive first information from an application function network element, and the interface unit is further configured to send second information to the application function network element. The first information indicates N QoS flows. The second information indicates M QoS flows. The M QoS flows belong to the N QoS flows. PDBs corresponding to at least two of the N QoS flows are different, and/or bit rates corresponding to at least two of the N QoS flows are different. The apparatus further includes a processing unit, configured to perform service transmission based on a first QoS flow, where the first QoS flow belongs to the M QoS flows.

Alternatively, the apparatus includes an interface unit, configured to receive first information from an application function network element, and the interface unit is further configured to send second information to the application function network element. The first information indicates N PDU sets. The second information indicates M PDU sets. The M PDU sets belong to the N PDU sets, and PSDBs corresponding to at least two of the N PDU sets are different. The apparatus further includes a processing unit, configured to perform service transmission based on a first PDU set, where the first PDU set belongs to the M PDU sets.

Each QoS flow includes at least one PDU set, and each of the at least one PDU set corresponds to at least one piece of the following information:
a PSDB of the PDU set and importance of the PDU set.

When a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, the interface unit is further configured to send fifth information to the core network element, where the fifth information indicates an increase in importance of at least one PDU set in the first QoS flow relative to importance of a PDU set in the second QoS flow, and the second QoS flow is a QoS flow used for service transmission before the first QoS flow. The interface unit is further configured to: receive the fifth information from the access network device, and adjust, based on the fifth information, the importance of the at least one PDU set in the first QoS flow to be greater than the importance of the PDU set in the second QoS flow.

M is greater than or equal to 1, N is greater than or equal to M, and M and N are positive integers.

For explanations of related content and beneficial effects of the service transmission method provided in the seventh aspect, refer to the service transmission method shown in the second aspect. Details are not described herein again.

According to an eighth aspect, a service transmission apparatus is provided. The apparatus may be a core network element and an access network device, or may be a module (for example, a chip or a circuit) in a core network element and an access network device, or may be a logical node, a logical module, or software that can implement all or some functions of a core network element and an access network device. The apparatus includes an interface unit, configured to receive first information from an application function network element, and the interface unit is further configured to send second information to the application function network element. The first information indicates N QoS flows. The second information indicates M QoS flows. The M QoS flows belong to the N QoS flows. PDBs corresponding to at least two of the N QoS flows are different, and/or bit rates corresponding to at least two of the N QoS flows are different. The apparatus further includes a processing unit, configured to perform service transmission based on a first QoS flow, where the first QoS flow belongs to the M QoS flows.

Alternatively, the apparatus includes an interface unit, configured to receive first information from an application function network element, and the interface unit is further configured to send second information to the application function network element. The first information indicates N PDU sets. The second information indicates M PDU sets. The M PDU sets belong to the N PDU sets, and PSDBs corresponding to at least two of the N PDU sets are different. The apparatus further includes a processing unit, configured to perform service transmission based on a first PDU set, where the first PDU set belongs to the M PDU sets.

Each QoS flow includes at least one PDU set, and each of the at least one PDU set corresponds to at least one piece of the following information:
a PSDB of the PDU set and importance of the PDU set.

When a difference between a PSDB corresponding to the first PDU set and a PSDB corresponding to a second PDU set is greater than a third threshold, the interface unit is further configured to send sixth information to the core network element, where the sixth information indicates an increase in importance of the first PDU set relative to importance of the second PDU set, and the second PDU set is a PDU set used for service transmission before the first PDU set. The interface unit is further configured to: receive the sixth information from the access network device, and adjust, based on the sixth information, the importance of the first PDU set to be greater than the importance of the second PDU set.

M is greater than or equal to 1, N is greater than or equal to M, and M and N are positive integers.

For explanations of related content and beneficial effects of the service transmission method provided in the eighth aspect, refer to the service transmission method shown in the second aspect. Details are not described herein again.

According to a ninth aspect, a communication apparatus is provided, including a processor. The processor is configured to: by executing a computer program or instructions or through a logic circuit, enable the communication apparatus to perform the method according to any one of the first aspect and the possible implementations of the first aspect, or enable the communication apparatus to perform the method according to any one of the second aspect and the possible implementations of the second aspect, or enable the communication apparatus to perform the method according to any one of the third aspect and the possible implementations of the third aspect, or enable the communication apparatus to perform the method according to any one of the fourth aspect and the possible implementations of the fourth aspect.

In a possible implementation, the communication apparatus further includes a memory, configured to store the computer program or the instructions.

In a possible implementation, the communication apparatus further includes a communication interface, configured to input and/or output a signal.

According to a tenth aspect, a communication apparatus is provided, including a logic circuit and an input/output interface. The input/output interface is configured to input and/or output a signal. The logic circuit is configured to perform the method according to any one of the first aspect and the possible implementations of the first aspect, or the logic circuit is configured to perform the method according to any one of the second aspect and the possible implementations of the second aspect, or the logic circuit is configured to perform the method according to any one of the third aspect and the possible implementations of the third aspect, or the logic circuit is configured to perform the method according to any one of the fourth aspect and the possible implementations of the fourth aspect.

According to an eleventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a twelfth aspect, a computer program product is provided, including instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a thirteenth aspect, a communication system is provided. The communication system includes the application function network element and the access network device. The application function network element is configured to perform the method according to any one of the first aspect and the possible implementations of the first aspect. The access network device is configured to perform the method according to any one of the second aspect and the possible implementations of the second aspect.

For descriptions of beneficial effects of the fifth aspect to the thirteenth aspect, refer to the descriptions of the first aspect to the fourth aspect.

### BRIEF DESCRIPTION OF DRAWINGS

FIG. 1 is a diagram of a communication system 100 applicable to an embodiment of this application;
FIG. 2 is a diagram of an application scenario 200 applicable to an embodiment of this application;
FIG. 3 is a schematic flowchart of a communication method 300 applicable to this application;
FIG. 4 is a schematic flowchart of another communication method 400 applicable to this application;
FIG. 5 is a schematic flowchart of another communication method 500 applicable to this application;
FIG. 6 is a block diagram of a communication apparatus 600 applicable to an embodiment of this application;
FIG. 7 is a block diagram of a communication apparatus 700 applicable to an embodiment of this application; and
FIG. 8 is a block diagram of a communication apparatus 800 applicable to an embodiment of this application.

### DESCRIPTION OF EMBODIMENTS

The following describes technical solutions in this application with reference to the accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) system, a new radio (new radio, NR) system, or a future communication system.

To address challenges of wireless broadband technologies and maintain a leading edge of a 3GPP network, the 3GPP standard group formulates a next-generation mobile communication network architecture (next-generation system), which is referred to as a 5G network architecture. The architecture not only supports access to a 5G core network (5G core network, 5GC) by using a wireless technology (such as LTE) defined by the 3GPP standard group, but also supports access to the 5GC by using a non-3GPP access technology through a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), or a next-generation packet data gateway (next-generation packet data gateway, NG-PDG). Core network functions are classified into a user plane function (user plane function, UPF) and a control plane function (control plane function, CPF). The UPF is mainly responsible for data packet forwarding, quality of service (quality of service, QoS) control, charging information collection, and the like. The CPF is mainly responsible for user registration authentication, mobility management, and delivery of a data packet forwarding policy, a QoS control policy, and the like to the UPF, and can be further classified into an access and mobility management function (access and mobility management function, AMF) and a session management function (session management function, SMF).

For example, the core network device includes a mobility management entity (mobility management entity, MME), a broadcast multicast service center (broadcast multicast service center, BMSC), and the like, or may include a corresponding functional entity in a 5G system, for example, a core network control plane (control plane, CP) or a user plane (user plane, UP) network function, for example, the SMF or the AMF. The core network control plane may alternatively be understood as a core network control plane function (control plane function, CPF) entity.

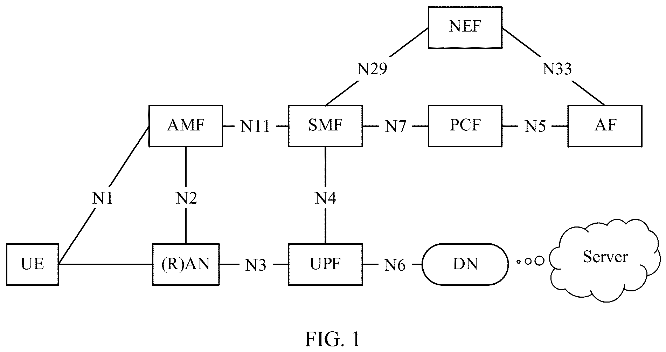

FIG. 1 shows an example of an architecture of a communication system applicable to an embodiment of this application. Functions of user equipment and network entities are described below.

The terminal device may be referred to as a terminal (terminal), a terminal device unit (subscriber unit), a terminal device station, a terminal device agent, a terminal device apparatus, an access terminal, a terminal in V2X communication, a subscriber unit, user equipment (user equipment, UE), a subscriber station, a mobile station (mobile station, MS), a remote station, a remote terminal, a mobile device, a mobile terminal, a user terminal, a wireless communication device, a user agent, or a user apparatus.

The terminal device in embodiments of this application may alternatively be a mobile phone (mobile phone), a tablet computer (pad), a computer with a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a vehicle-mounted device, a wearable device, a terminal in a 5G network, a terminal in a future evolved network, or the like.

The wearable device may also be referred to as a wearable intelligent device, and is a generic term for wearable devices such as head-mounted display XR glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also a device with a strong function implemented with the support of software, data exchange, and cloud interaction. In a broad sense, wearable intelligent devices include full-featured and large-sized devices that can implement all or some functions without depending on smartphones, for example, smart watches or smart glasses, and include devices that are dedicated to one type of application function and that need to collaboratively work with other devices such as smartphones, for example, various smart bands or smart jewelry for monitoring physical signs.

A (radio) access network (radio access network, (R)AN) may also be referred to as an access network device, a RAN entity, an access node, or the like. The RAN is a network including a plurality of RAN nodes, and implements a radio physical layer function, a resource scheduling function, a radio resource management function, a radio access control function, and a mobility management function. The 5G-RAN is connected to a UPF through a user plane interface N3 to transmit data of a terminal device. The 5G-RAN establishes a control plane signaling connection to an AMF through a control plane interface N2 to implement a function such as radio access bearer control. The RAN may be any device with a wireless transceiver function, including but not limited to a 5G base station (5G node base, gNB), an evolved base station (evolved Node base, eNB), a wireless fidelity access point (wireless fidelity access point, Wi-Fi AP), a world microwave access interoperability base station (world interoperability for microwave access base station, WiMAX BS), a transmission receiving point (transmission receiving point, TRP), a radio relay node, a radio backhaul node, an open access network (open RAN, ORAN), a cloud radio access network (cloud RAN, CRAN), or the like. The RAN in the communication system 100 shown in FIG. 1 may be a plurality of RAN nodes. The plurality of RAN nodes may be nodes of a same type, or may be nodes of different types.

An access network device in embodiments of this application may alternatively be a device configured to communicate with the terminal device. The access network device may be a base transceiver station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved Node base, eNB) in an LTE system, or may be a radio controller in a scenario of a cloud radio access network (cloud radio access network, CRAN). Alternatively, the access network device may be a relay station, an access point, a vehicle-mounted device, a wearable device, an access network device in a future 5G network, an access network device in a future evolved PLMN network, or the like. This is not limited in embodiments of this application. The RAN in this application may alternatively be a logical node, a logical module, software, or the like that can implement all or some functions of the RAN.

In some possible scenarios, the RAN may include a plurality of RAN nodes that cooperate to assist the terminal device in implementing radio access, and different RAN nodes respectively implement some functions of the RAN. For example, the RAN node may be a central unit (central unit, CU), a distributed unit (distributed unit, DU), a CU control plane (CU control plane, CU-CP), a CU user plane (CU user plane, CU-UP), a radio unit (radio unit, RU), or the like. The CU and the DU may be separately disposed, or may be included in a same baseband unit (baseband unit, BBU). The RU may be included in a radio frequency device or a radio frequency unit. For example, the RU may be included in a remote radio unit (remote radio unit, RRU), an active antenna processing unit (active antenna unit, AAU), or a remote radio head (remote radio head, RRH).

In different communication systems, the CU (including the CU-CP and the CU-UP), the DU, or the RU may also have different names, but a person skilled in the art may understand meanings thereof. For example, in an ORAN system, a CU may also be referred to as an open CU (open CU, O-CU), a DU may also be referred to as an open DU (open CU, O-CU), a CU-CP may also be referred to as an open CU-CP (open CU-CP, O-CU-CP), a CU-UP may also be referred to as an open CU-UP (open CU-UP, O-CU-UP), and an RU may also be referred to as an open RU (open RU, O-RU). Any one of the CU, the DU, and the RU in this application may be implemented by using a software module, a hardware module, or a combination of a software module and a hardware module.

The base station may be a macro base station, a micro base station, a pico base station, a small cell, a relay station, a balloon station, or the like.

The AMF is mainly responsible for functions such as terminal device authentication, terminal device mobility management, network slice selection, and SMF selection. In addition, the AMF is further responsible for transferring a user policy between a terminal device and a policy control function (policy control function, PCF).

The SMF is mainly responsible for control plane functions in session management of a terminal device, including UPF selection and control, internet protocol (internet protocol, IP) address assignment, QoS management of a session, and obtaining of a policy and charging control (policy and charging control, PCC) policy (from the PCF).

The UPF serves as an anchor point of a protocol data unit (protocol data unit, PDU) session connection, is responsible for data packet filtering, data transmission/forwarding, rate control, charging information generation, and the like of a terminal device, and provides a connection to a data network (data network, DN).

The DN is a specific data service network to which a terminal device accesses. The DN is responsible for providing an operator service, internet access, or a third-party service. The DN includes a server (server), and the server may implement video source encoding, rendering, and the like. A typical DN includes an internet network, an IP multimedia service (IP multimedia service, IMS) network, and the like. The DN is identified by a data network name (data network name, DNN) in a 5G network.

A network exposure function (network exposure function, NEF) exposes a service and a capability of a 3GPP network function to an application function (application function, AF), and may also enable the AF to provide information for the 3GPP network function.

The AF interacts with a core network element to provide some services, for example, interacts with the PCF to control a service policy, interacts with the NEF to obtain some network capability information or provide some application information for a network, and provides some data network access point information for the PCF to generate routing information of a corresponding data service.

The PCF provides configuration policy information for a terminal device, provides policy information for a control plane network element (for example, an AMF or an SMF) of a network to manage and control the terminal device, and generates a terminal device access policy and a QoS flow control policy.

In embodiments of this application, the terminal device is connected to the RAN in a wireless manner, and the RAN is connected to a 5GC device in a wireless or wired manner. The 5GC device and the RAN device may be different independent physical devices, or functions of the 5GC device and logical functions of the RAN device may be integrated into a same physical device, or some functions of the 5GC device and some functions of the RAN device may be integrated into one physical device. The terminal device may be located at a fixed position, or may be mobile.

The 5GC device mainly includes the NEF network element, the PCF network element, the AF network element, the AMF network element, the SMF network element, the UPF network element, and the like.

It should be noted that the foregoing "network element" may also be referred to as an entity, a device, an apparatus, a module, or the like. This is not particularly limited in this application. In addition, in this application, for ease of understanding and description, "network element" is omitted in some descriptions. For example, the UPF network element is referred to as a UPF for short. In this case, the "UPF" should be understood as a UPF network element or a UPF entity. Descriptions of a same or similar situation are omitted below.

It should be noted that a name of each network element included in FIG. 1 is merely a name, and the name does not limit a function of the network element. In a 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be noted that the network elements in FIG. 1 do not necessarily exist simultaneously, and required network elements may be determined based on a requirement. A connection relationship between the network elements in FIG. 1 is not uniquely determined, and may be adjusted based on a requirement.

It may be understood that the foregoing network elements or functions may be network elements in a hardware device, or may be software functions running on dedicated hardware or virtualized functions instantiated on a platform (for example, a cloud platform).

In recent years, with continuous development of 5G communication systems, a data transmission capacity is increasingly large, and a data transmission delay is increasingly low. A rapid increase in a data transmission rate in a communication process has made a real-time video transmission service become one of the core services in a current network. For example, current real-time video transmission services include clouding gaming (clouding gaming, CG), an extended reality (extended reality, XR) service, and the like. The XR service includes a VR service and an AR service.

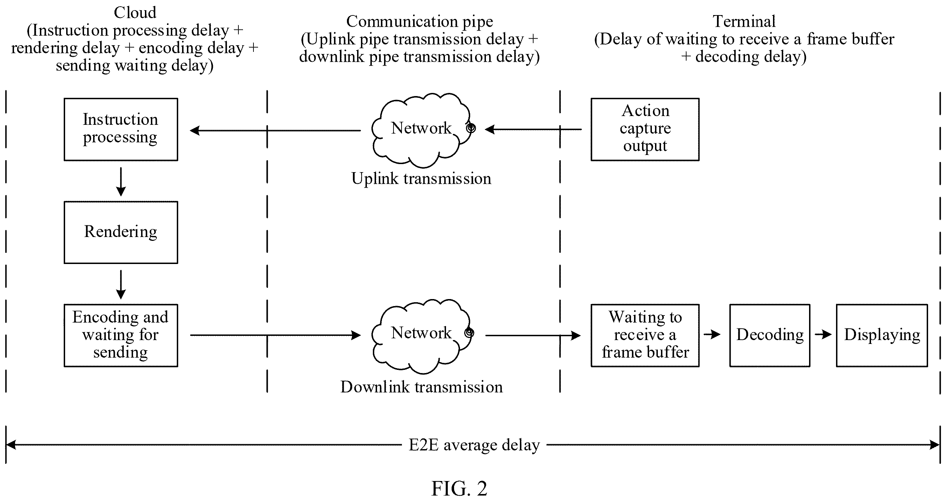

FIG. 2 shows an implementation process of a VR service in detail by using an example of a VR service scenario applicable to this application.

Specifically, a terminal captures an action, and outputs captured action instructions to the cloud through uplink transmission. The cloud processes the received instructions, performing rendering for a rendering task, encodes rendered data, and waits to send encoded data. The cloud sends the encoded data to the terminal through downlink transmission. The terminal device waits to receive a frame buffer, decodes a buffered frame, and finally displays the frame on the terminal.

In this process, when a terminal side waits to receive a frame buffer, a delay of waiting to receive the frame buffer is generated; and when the terminal side performs decoding, a decoding delay is generated. When a communication pipe performs uplink transmission, an uplink pipe transmission delay is generated; and when the communication pipe performs downlink transmission, a downlink pipe transmission delay is generated. When a cloud side processes a received instruction, an instruction processing delay is generated; when the cloud side renders an action, a rendering delay is generated; when the cloud side encodes rendered data, an encoding delay is generated; and when the cloud side waits to send encoded data, a sending waiting delay is generated.

For example, to ensure user experience, an average end-to-end (end to end, E2E) delay is 70 milliseconds (ms). Generally, a capability on the terminal side is fixed. A decoding delay of performing decoding by a terminal at 90 frames per second (frame per second, FPS) is about 12 ms, and a delay of waiting to receive the frame buffer by the terminal is about 8 ms. Therefore, a maximum delay allocated to the terminal side is 20 ms, and a maximum delay of uplink pipe transmission and downlink pipe transmission is 20 ms. In this case, a maximum remaining delay on the cloud is 30 ms. However, a rendering time of the cloud is determined by a quantity of rendering tasks of a cloud application server. When the cloud application server has a large quantity of rendering tasks, the rendering time is long. When the cloud application server has a small quantity of rendering tasks, the rendering time is short. Therefore, a problem of an excessively long rendering delay may occur in the cloud due to an excessively large quantity of rendering tasks, affecting user experience.

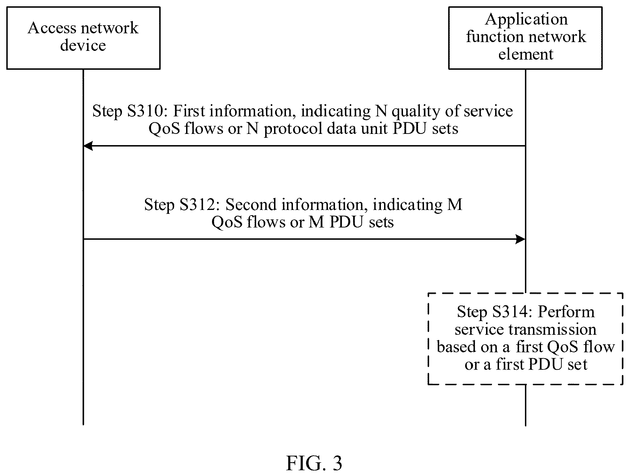

This application provides a communication method 300 to ensure a service transmission delay and reliability. FIG. 3 is a schematic flowchart of a communication method 300 according to this application.

It should be noted that in FIG. 3, an application function network element and an access network device are used as execution bodies of the interaction schematic to illustrate the method. However, an execution body of the interaction schematic is not limited in this application. For example, the application function network element and the access network device in FIG. 3 may alternatively be a chip, a chip system, a processor, or the like that supports the application function network element and the access network device in implementing the method, or may be a logical node, a logical module, or software that implements all or some functions of the application function network element and the access network device.

It should be noted that the application function network element in this application may be an application server (server).

Step S310: The application function network element sends first information to the access network device, where the first information indicates N QoS flows or N PDU sets (PDU set). Correspondingly, the access network device receives the first information from the application function network element.

Specifically, to implement QoS management of a service, the service is transmitted by using an end-to-end QoS flow (QoS flow). Different QoS flows have at least one different parameter during service transmission.

Each QoS flow corresponds to at least one of the following parameters for service transmission:
an average transmission bandwidth, a peak transmission bandwidth, an average delay, a peak delay, delay jitter, an initial packet response delay, a packet delay budget (packet delay budget, PDB), a packet error rate (packet error rate, PER), a packet loss rate (packet loss rate, PLR), a packet error loss rate (packet error loss rate, PELR), a bit rate (bit rate), a guaranteed bit rate (guaranteed bit rate, GBR), a maximum bit rate (maximum bit rate, MBR), and the like.

PDBs corresponding to at least two of the N QoS flows are different, and/or bit rates corresponding to at least two of the N QoS flows are different.

Specifically, each QoS flow includes at least one PDU set, and each of the at least one PDU set includes at least one PDU. Each PDU set corresponds to at least one piece of the following information:
a PDU set size (PDU set size), a PDU set sequence number (PDU set sequence number), a PDU set delay budget (PDU set delay budget, PSDB), PDU set importance (PDU set importance), and the like, where the PDU set importance indicates importance of the PDU set compared with another PDU set included in the QoS flow.

PSDBs corresponding to at least two of the N PDU sets are different.

For example, in the first information, N QoS flows may be identified by using QoS flow identifiers (QoS flow identifier, QFI) or 5G quality of service indicators (5G quality of service identifier, 5QI), and one QoS flow is identified by using a unique QFI or 5QI. In the first information, N PDU sets may be identified by using PDU set sequence numbers (PDU set sequence number), and one PDU set is identified by using a unique sequence number.

For example, the N QoS flows or the N PDU sets may be considered as N QoS flows or N PDU sets supported by the application function network element in service transmission.

Step S312: The access network device sends second information to the application function network element, where the second information indicates M QoS flows or M PDU sets. Correspondingly, the application function network element receives the second information from the access network device.

Specifically, the M QoS flows belong to the N QoS flows, and the M PDU sets belong to the N PDU sets, where M ≥ 1, N ≥ M, N is greater than 2, and M and N are positive integers.

For example, in the second information, the M QoS flows may be identified by using QFIs or 5QIs, and one QoS flow is identified by using a unique QFI or 5QI. In the second information, the M PDU sets may be identified by using PDU set sequence numbers (PDU set sequence number), and one PDU set is identified by using a unique sequence number.

For example, the access network device may determine the M QoS flows based on a current channel status. For example, if the current channel status is relatively poor, the access network device may determine M QoS flows with relatively high PDBs and/or relatively low bit rates during service transmission; or if the current channel status is relatively good, the access network device may determine M QoS flows with relatively low PDBs and/or relatively high bit rates during service transmission.

For example, the access network device may determine the M PDU sets based on a current channel status. For example, if the current channel status is relatively poor, the access network device may determine M PDU sets with relatively high PSDBs during service transmission; or if the current channel status is relatively good, the access network device may determine M PDU sets with relatively low PSDBs during service transmission.

Alternatively, the access network device may further determine the M QoS flows or the M PDU sets based on a current service transmission bandwidth, delay jitter, a packet loss, and the like. This is not limited in this application.

Step S314: The application function network element performs service transmission based on a first QoS flow or a first PDU set.

The first QoS flow belongs to the M QoS flows, and the first PDU set belongs to the M PDU sets.

Specifically, if the access network device indicates, to the application function network element, M QoS flows with relatively high PDBs and/or relatively low bit rates during service transmission, the application function network element may adjust a rendering task to reduce a rendering delay, so that reliability and a delay of service transmission are ensured. If the access network device indicates, to the application function network element, M QoS flows with relatively low PDBs and/or relatively high bit rates during service transmission, the application function network element may adjust a rendering task to properly increase a rendering delay, so that reliability and a delay of service transmission can also be ensured.

Specifically, if the access network device indicates, to the application function network element, M PDU sets with relatively high PSDBs during service transmission, the application function network element may adjust a rendering task to reduce a rendering delay, so that reliability and a delay of service transmission are ensured. If the access network device indicates, to the application function network element, M PDU sets with relatively low PSDBs during service transmission, the application function network element may adjust a rendering task to properly increase a rendering delay, so that reliability and a delay of service transmission can also be ensured, improving user experience.

According to the communication method 300, the application function network element may obtain air interface information of service transmission, and adjust a service processing time in time, to ensure the reliability of service transmission.

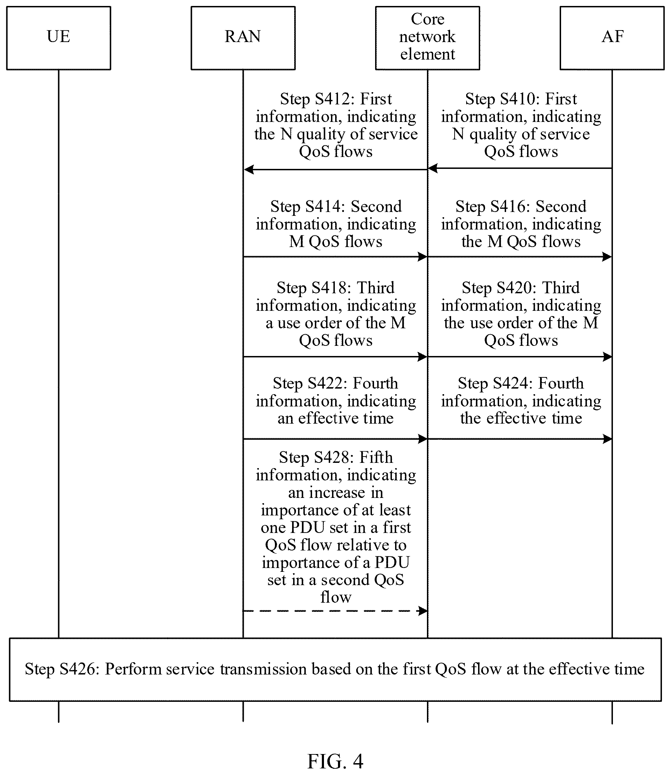

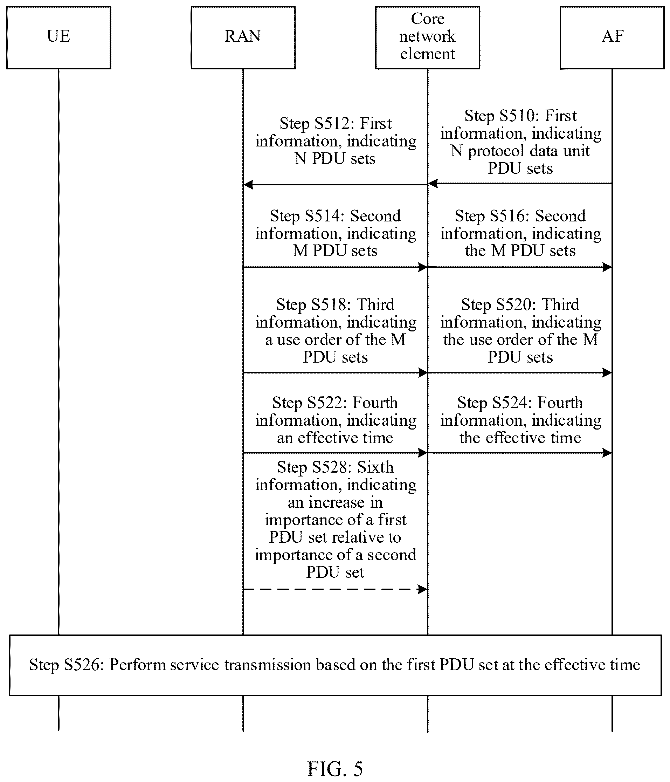

Next, by way of example but not limitation, in FIG. 4 and FIG. 5, an example in which an AF is used as an application function network element and an example in which a RAN is used as an access network device are separately used to describe the technical solutions in this application in detail.

It should be noted that in FIG. 4 and FIG. 5, the AF, a core network element, the RAN, and UE are used as execution bodies of the interaction schematics to respectively illustrate a communication method 400 and a communication method 500. However, execution bodies of the interaction schematics are not limited in this application.

For example, the AF, the core network element, the RAN, and the UE in FIG. 4 and FIG. 5 may alternatively be a chip, a chip system, a processor, or the like that supports the AF, the core network element, the RAN, and the UE in implementing the method, or may be a logical node, a logical module, or software that implements all or some functions of the AF, the core network element, the RAN, or the UE.

The communication method 400 shown in FIG. 4 includes the following steps.

Step S410: An AF sends first information to a core network element, where the first information indicates N QoS flows. Correspondingly, the core network element receives the first information from the AF.

Step S412: The core network element forwards the first information to a RAN. Correspondingly, the RAN receives the first information from the core network element.

It should be noted that the first information may be transmitted to the RAN by using a control plane of a core network, or may be transmitted to the RAN by using a user plane of a core network. This is not limited in this application.

PDBs corresponding to at least two of the N QoS flows are different, and/or bit rates corresponding to at least two of the N QoS flows are different.

Step S414: The RAN sends second information to the core network element, where the second information indicates M QoS flows. Correspondingly, the core network element receives the second information from the RAN.

Specifically, the RAN may add the second information to a general packet radio system tunneling protocol for the user (general packet radio system tunneling protocol for the user, GTP-U) header, and send the second information to the core network element through an N3 interface.

Step S416: The core network element forwards the second information to the AF. Correspondingly, the AF receives the second information from the core network element.

Specifically, the core network element may send the second information to the AF through a QoS monitoring interface.

Specifically, the RAN may determine the M QoS flows based on a status such as a current channel status, a current service transmission bandwidth, delay jitter, or a packet loss.

PDBs corresponding to at least two of the M QoS flows are different, and/or bit rates corresponding to at least two of the M QoS flows are different.

Specifically, the RAN may indicate one or more QoS flows by using the second information, that is, M is greater than or equal to 1.

When M > 1, the method further includes step S418 and step S420 below.

Step S418: The RAN sends third information to the core network element, where the third information indicates a use order of the M QoS flows. Correspondingly, the core network element receives the third information from the RAN.

Step S420: The core network element forwards the third information to the AF. Correspondingly, the AF receives the third information from the core network element.

For example, M = 5, and the M QoS flows are respectively identified by using a QFI #1, a QFI #2, a QFI #3, a QFI #4 and a QFI #5. The third information may indicate the use order of the M QoS flows by using Table 1 below.

**Table 1**

| QoS flow | Use order |
|---|---|
| QFI #1 | 3 |
| QFI #2 | 2 |
| QFI #3 | 4 |
| QFI #4 | 1 |
| QFI #5 | 5 |

It can be learned from Table 1 that the use order of the five QoS flows indicated by the third information is the QFI #4, the QFI #2, the QFI #1, QFI #3, and the QFI #5.

It should be understood that the use order of the five QoS flows that is indicated by the third information may also be a priority order that is recommended by the RAN and in which the AF selects the five QoS flows. Even if the RAN recommends the QFI #4 as the first order, the AF may not perform service transmission based on the QFI #4. For example, when the AF identifies that the current QFI #4 cannot be used for service transmission, the AF sequentially selects, for service transmission, the QFI #2 ranking second.

Step S422: The RAN sends fourth information to the core network element, where the fourth information indicates an effective time, and the effective time is a start time of performing service transmission based on the M QoS flows. Correspondingly, the core network element receives the fourth information from the RAN. Further, the effective time is a start time of performing service transmission based on the first QoS flow.

Step S424: The core network element forwards the fourth information to the AF. Correspondingly, the AF receives the fourth information from the core network element.

For example, the fourth information may indicate the effective time by using an absolute time, or may indicate the effective time by using a time interval between the effective time and a current time. This is not limited in this application.

It should be noted that the third information and the second information may be independently transmitted, or the third information and the second information may be carried in a same message for transmission. This is not limited in this application. The fourth information and the second information are independently transmitted, or the fourth information and the second information may be carried in a same message for transmission. This is not limited in this application.

Step S426: The AF performs service transmission based on the first QoS flow at the effective time.

Specifically, when M = 1, the first QoS flow is one QoS flow indicated by the second information. When M > 1, the first QoS flow ranks first among the M QoS flows. For example, the first QoS flow is the QFI #4 in Table 1 above. Alternatively, the first QoS flow ranks second among the M QoS flows. For example, the first QoS flow is the QFI #2 in Table 1 above. This is not limited in this application.

According to the communication method 400, the AF may obtain air interface information of service transmission at a QoS flow granularity, and adjust a service processing time in time, to ensure reliability and a delay of service transmission.

A large amount of repeated information exists during transmission of a video service. To facilitate transmission of the video service, a solution in which the repeated information of the video service is removed at a transmit end and recovered at a receive end appears. For example, functions of an intra-coded frame (intra picture, I-frame), a predictive coded frame (predictive frame, P-frame), and an instantaneous decoder refresh (instantaneous decoder refresh, IDR) frame in the current H.264 video compression standard are as follows:
(1) I-frame: The I-frame is a frame that contains all information and can be decoded independently without referring to another image. Generally, the 1^{st} frame in a video sequence is always an I-frame.
(2) P-frame: The P-frame is also referred to as an inter-frame predictive coded frame, can be encoded or decoded only by referring to a previous I-frame, and indicates a difference between a current frame picture and a previous frame (where the previous frame may be an I-frame or a P-frame). Compared with an I-frame, a P-frame usually occupies fewer data bits. However, the P-frame, is highly dependent on a previous I-frame and P-frame, and therefore is very sensitive to a transmission error.
(3) IDR-frame: Both the I-frame and IDP-frame use intra-frame prediction. To facilitate the control of encoding and decoding procedures, an initial I-frame and other I-frames need to be distinguished during encoding or decoding. Therefore, the initial I-frame is referred to as an IDR-frame. The IDR-frame is used for immediate refreshing, so that an error is not propagated. It should be noted that an IDR-frame is definitely an I-frame, but an I-frame is not necessarily an IDR-frame.

The I-frame and the IDR-frame are key frames in the encoding or decoding procedure. Generally, the I-frame and the IDR-frame are more important than the P-frame.

As described above, one QoS flow includes at least one PDU set (PDU set), and each PDU set includes at least one PDU.

For example, each PDU set may carry a load of an information unit generated by an AF or an application server (server). For example, each PDU set may carry a video frame or a video slice in a video service such as a VR service, an AR service, or a clouding gaming service.

To further implement QoS management for services based on PDU sets, a UPF identifies each PDU set and sends information about each PDU set (PDU set information) to the RAN. The RAN ensures service transmission based on the information about the PDU set.

The information about each PDU set (PDU set information) corresponds to at least one of the following:
a PDU set size (PDU set size), a PDU set sequence number (PDU set sequence number), a PDU set delay budget (PDU set delay budget, PSDB), PDU set importance (PDU set importance), and the like, where the PDU set importance indicates importance of the PDU set compared with another PDU set included in the QoS flow. For example, when network congestion occurs, the RAN may discard some data packets based on the importance of the PDU set.

Generally, the UPF may identify the information about each PDU set (PDU set information) based on a received real-time transport protocol (real-time transport protocol, RTP) or secure real-time transport protocol (secure real-time transport protocol, SRTP) extension header from the AF. However, when the UPF cannot obtain the information about each PDU set (PDU set information) from the AF (for example, the AF does not use an RTP/SRTP, or the AF encrypts the RTP/SRTP extension header), the UPF configures the information about each PDU set (PDU set information). Currently, there is no implementation of how the UPF configures the information about each PDU set (PDU set information).

This application provides a method for configuring information about a PDU set. The method is described as follows:
When a difference between a PDB corresponding to the first QoS flow used by the AF for service transmission and a PDB corresponding to a second QoS flow is greater than a first threshold, it means that a rendering task on an AF side changes greatly, and the AF sends a first frame by using a PDU set in the first QoS flow. Because a subsequent P-frame needs to be decoded depending on the first frame, the UPF increases importance of the PDU set carrying the first frame. The second QoS flow is a QoS flow used for service transmission before the first QoS flow.

Specifically, that the UPF increases the importance of the PDU set carrying the first frame may be specifically: The UPF configures that the importance of the PDU set carrying the first frame in the first QoS flow is greater than importance of a PDU set in the second QoS flow.

Specifically, the first frame may be a frame corresponding to the effective time, or may be a first frame after the effective time arrives. The first frame may be an I-frame or an IDR-frame. This is not limited in this application.

For example, the method 400 may further include step S428: When determining that the difference between the PDB corresponding to the first QoS flow used for service transmission and the PDB corresponding to the second QoS flow is greater than the first threshold, the RAN sends fifth information to the UPF, where the fifth information indicates an increase in importance of at least one PDU set in the first QoS flow relative to importance of a PDU set in the second QoS flow. The at least one PDU set in the first QoS flow herein may be the foregoing PDU set carrying the first frame. Correspondingly, the UPF receives the fifth information from the RAN.

For example, the RAN may send the first threshold to the AF, and the AF may also determine that the difference between the PDB corresponding to the first QoS flow used for service transmission and the PDB corresponding to the second QoS flow is greater than the first threshold.

Alternatively, when a difference between a bit rate corresponding to the first QoS flow used by the AF for service transmission and a bit rate corresponding to a second QoS flow is greater than a second threshold, it means that a rendering task on an AF side changes greatly, and the AF sends the first frame by using a PDU set in the first QoS flow. Because a subsequent P-frame needs to be decoded depending on the first frame, importance of the PDU set carrying the first frame is increased. The second QoS flow is a QoS flow used for service transmission before the first QoS flow.

For example, the method 400 may further include step S428: When determining that the difference between the bit rate corresponding to the first QoS flow used for service transmission and the bit rate corresponding to the second QoS flow is greater than the second threshold, the RAN sends fifth information to the UPF, where the fifth information indicates an increase in importance of at least one PDU set in the first QoS flow relative to importance of a PDU set in the second QoS flow. The at least one PDU set in the first QoS flow herein may be the foregoing PDU set carrying the first frame. Correspondingly, the UPF receives the fifth information from the RAN.

For example, the RAN may send the second threshold to the AF, and the AF may also determine that the difference between the bit rate corresponding to the first QoS flow used for service transmission and the bit rate corresponding to the second QoS flow is greater than the second threshold.

The first threshold and the second threshold may be specified in a protocol, or may be preset. This is not limited in this application.

According to the foregoing method, the core network element may configure importance of a PDU set in information about the PDU set to improve frame transmission reliability and user experience.

According to the communication method 400 described in FIG. 4, the air interface information of service transmission at the QoS flow granularity is obtained, so that service transmission reliability can be ensured. To obtain more precise air interface information of service transmission, FIG. 5 provides a communication method at a PDU set (PDU set) granularity. FIG. 5 is a schematic flowchart of a communication method 500.

Step S510: An AF sends first information to a core network element, where the first information indicates N PDU sets. Correspondingly, the core network element receives the first information from the AF.

Step S512: The core network element forwards the first information to a RAN. Correspondingly, the RAN receives the first information from the core network element.

It should be noted that the first information may be transmitted to the RAN by using a control plane of a core network, or may be transmitted to the RAN by using a user plane of a core network. This is not limited in this application.

PSDBs corresponding to at least two of the N PDU sets are different.

Step S514: The RAN sends second information to the core network element, where the second information indicates M PDU sets. Correspondingly, the core network element receives the second information from the RAN.

Specifically, the RAN may add the second information to a GTP-U header, and send the GTP-U header to the core network element through an N3 interface.

Step S516: The core network element forwards the second information to the AF. Correspondingly, the AF receives the second information from the core network element.

Specifically, the core network element may send the second information to the AF through a QoS monitoring interface.

Specifically, the RAN may determine the M PDU sets based on a status such as a current channel status, a current service transmission bandwidth, delay jitter, or a packet loss.

PSDBs corresponding to at least two of the M PDU sets are different.

Specifically, the RAN may indicate one or more PDU sets by using the second information, that is, M is greater than or equal to 1.

When M > 1, the method further includes step S518 and step S520 below.

Step S518: The RAN sends third information to the core network element, where the third information indicates a use order of the M PDU sets. Correspondingly, the core network element receives the third information from the RAN.

Step S520: The core network element forwards the third information to the AF. Correspondingly, the AF receives the third information from the core network element.

For example, M = 5, and the M PDU sets are identified by using a PDU set sequence number #1, a PDU set sequence number #2, a PDU set sequence number #3, a PDU set sequence number #4, and a PDU set sequence number #5, and the third information may indicate a use order of the M PDU sets by using Table 2 below.

**Table 2**

| PDU set | Use order |
|---|---|
| PDU set sequence number #1 | 3 |
| PDU set sequence number #2 | 2 |
| PDU set sequence number #3 | 4 |
| PDU set sequence number #4 | 1 |
| PDU set sequence number #5 | 5 |

It can be learned from Table 2 that the use order of the five PDU sets that is indicated by the third information is the PDU set sequence number #4, the PDU set sequence number #2, the PDU set sequence number #1, the PDU set sequence number #3, and the PDU set sequence number #5.

It should be understood that the use order of the five PDU sets that is indicated by the third information may also be a priority order that is recommended by the RAN and in which the AF selects the five PDU sets. Even if the RAN recommends the PDU set sequence number #4 as the first order, the AF may not perform service transmission based on the PDU set sequence number #4. For example, when the AF identifies that the current PDU set sequence number #4 cannot be used for service transmission, the AF sequentially selects, for service transmission, the PDU set sequence number #2 ranking second.

Step S522: The RAN sends fourth information to the core network element, where the fourth information indicates an effective time, and the effective time is a start time of performing service transmission based on the M PDU sets. Correspondingly, the core network element receives the fourth information from the RAN. Further, the effective time is a start time of performing service transmission based on the first PDU set.

Step S524: The core network element forwards the fourth information to the AF. Correspondingly, the AF receives the fourth information from the core network element.

For example, the fourth information may indicate the effective time by using an absolute time, or may indicate the effective time by using a time interval between the effective time and a current time. This is not limited in this application.

It should be noted that the third information and the second information may be independently transmitted, or the third information and the second information may be carried in a same message for transmission. This is not limited in this application. The fourth information and the second information are independently transmitted, or the fourth information and the second information may be carried in a same message for transmission. This is not limited in this application.

Step S526: The AF performs service transmission based on the first PDU set at the effective time.

Specifically, when M = 1, the first PDU set is one PDU set indicated by the second information. When M > 1, the first PDU set ranks first among the M PDU sets. For example, the first PDU set is the PDU set sequence number #4 in Table 2 above. Alternatively, the first PDU set ranks second among the M PDU sets. For example, the first PDU set is the PDU set sequence number #2 in Table 2 above. This is not limited in this application.

According to the communication method 500, the AF may obtain the air interface information of service transmission at the PDU set granularity, and adjust a service processing time in time, to ensure reliability and a delay of service transmission.

When a difference between a PSDB corresponding to the first PDU set used by the AF for service transmission and a PSDB corresponding to a second PDU set is greater than a third threshold, it means that a rendering task on an AF side changes greatly, and the AF sends a first frame by using the first PDU set. Because a subsequent P-frame needs to be decoded depending on the first frame, the UPF increases importance of the first PDU set carrying the first frame. The second PDU set is a PDU set used for service transmission before the first PDU set.

Specifically, that the UPF increases the importance of the first PDU set carrying the first frame may be specifically: The UPF configures that the importance of the first PDU set carrying the first frame is greater than importance of the second PDU set.

Specifically, the first frame sent by the AF may be a frame corresponding to the effective time, or may be a first frame after the effective time arrives.

Optionally, the first frame may be an I-frame or an IDR-frame. This is not limited in this application.

For example, the method 500 may further include step S528: When determining that the difference between the PSDB corresponding to the first PDU set used for service transmission and the PSDB corresponding to the second PDU set is greater than the third threshold, the RAN sends sixth information to the UPF, where the sixth information indicates an increase in importance of the first PDU set relative to importance of the second PDU set. Correspondingly, the UPF receives the sixth information from the RAN.

For example, the RAN may send the third threshold to the AF, and the AF may also determine that the difference between the PSDB corresponding to the first PDU set used for service transmission and the PSDB corresponding to the second PDU set is greater than the third threshold.

The third threshold may be specified in a protocol, or may be preset. This is not limited in this application.

According to the foregoing method, the core network element may configure importance of a PDU set in information about the PDU set to improve frame transmission reliability and user experience.

It should be noted that "the application function network element sends the first information to the access network device" in this application may be understood as that a destination end of the first information is the access network device, and specifically, may include directly or indirectly sending the first information to the access network device. In this application, "the access network device receives the first information from the application function network element" may be understood as that a source end of the first information is the application function network element, and specifically, may include directly or indirectly receiving the first information from the application function network element. In this application, necessary processing, for example, a format change, may be performed on the first information between the source end for sending the information and the destination end, but the destination end can understand valid information from the source end. Similar descriptions in this application may be understood similarly. Details are not described herein again.

Finally, apparatus embodiments in embodiments of this application are described.

To implement functions in the methods provided in this application, both an access network device and an application function network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

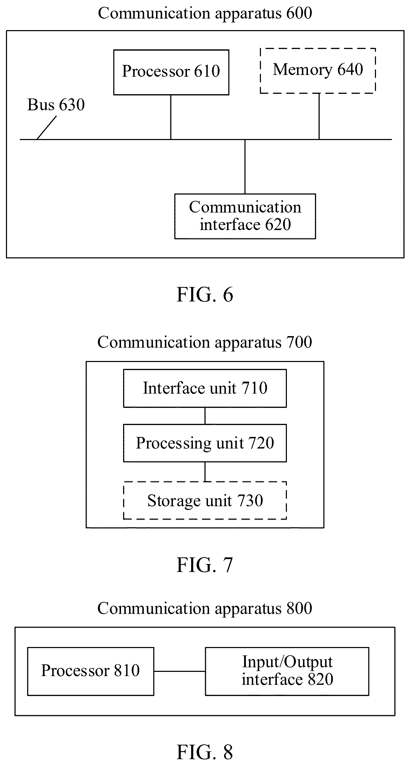

FIG. 6 is a block diagram of a communication apparatus 600 according to an embodiment of this application. The communication apparatus 600 includes a processor 610 and a communication interface 620. The processor 610 and the communication interface 620 may be connected to each other through a bus 630. The communication apparatus 600 may be an access network device, or may be an application function network element.

Optionally, the communication apparatus 600 may further include a memory 640. The memory 640 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 640 is configured to store related instructions and data.

The processor 610 may be one or more central processing units (central processing unit, CPU). When the processor 610 is one CPU, the CPU may be a single-core CPU, or may be a multicore CPU.

When the communication apparatus 600 is an application function network element, for example, the communication apparatus 600 is configured to perform the following operation: sending first information to an access network device, and so on.

When a communication apparatus 700 is an access network device, for example, the communication apparatus 600 is configured to perform the following operation: sending second information to an application function network element, and so on.

The foregoing content is merely used as an example for description. When the communication apparatus 600 is an application function network element/access network device, the communication apparatus 600 is responsible for performing the methods or steps related to the application function network element/access network device in the foregoing method embodiments.

The foregoing descriptions are merely examples. For specific content, refer to the content shown in the foregoing method embodiments. For implementation of each operation in FIG. 6, further correspondingly refer to the corresponding descriptions in the method embodiments shown in FIG. 3 to FIG. 5.

FIG. 7 is a block diagram of a communication apparatus 700 according to an embodiment of this application. The communication apparatus 700 may be an application function network element or an access network device, or may be a module (for example, a chip) in an application function network element or an access network device, or may be a logical node, a logical module, or software that can implement all or some functions of an application function network element or an access network device, and is configured to implement the methods in the foregoing embodiments. The communication apparatus 700 includes an interface unit 710. The following describes the interface unit 710 and a processing unit 720 by using examples.

The interface unit 710 may include a sending unit and a receiving unit. The sending unit is configured to perform a sending action of the communication apparatus 700. The receiving unit is configured to perform a receiving action of the communication apparatus 700. For ease of description, in embodiments of this application, the sending unit and the receiving unit are combined into one interface unit. This is described herein once for all, and details are not described below again.

When the communication apparatus 700 is an application function network element, for example, the interface unit 710 is configured to send first information to an access network device, and the processing unit 720 is configured to perform service transmission by using a first QoS flow or a first PDU set.

When the communication apparatus 700 is an access network device, for example, the interface unit 710 is configured to receive first information from an application function network element, and the processing unit 720 performs service transmission by using a first QoS flow or a first PDU set.

The foregoing content is merely used as an example for description. When the communication apparatus 700 is an access network device or an application function network element, the communication apparatus 700 is responsible for performing the methods or steps related to the access network device or the application function network element in the foregoing method embodiments.

Optionally, the communication apparatus 700 further includes a storage unit 730, and the storage unit 730 is configured to store a program or code used to perform the foregoing methods.

The apparatus embodiments shown in FIG. 6 and FIG. 7 are used to implement the content described in FIG. 3 to FIG. 5. For specific execution steps and methods of the apparatuses shown in FIG. 6 and FIG. 7, refer to the content described in the foregoing method embodiments.

FIG. 8 is a block diagram of a communication apparatus 800 according to an embodiment of this application. The communication apparatus 800 is configured to implement a function of an access network device/application function network element. The communication apparatus 800 may be an access network device/application function network element, or may be a module such as a chip in an access network device/application function network element, or may be a logical node, a logical module, or software that can implement all or some functions of an access network device/application function network element.

The communication apparatus 800 includes an input/output interface 820 and a processor 810. The input/output interface 820 may be an input/output circuit. The processor 810 may be a signal processor, a chip, or another integrated circuit that may implement the methods in this application. The input/output interface 820 is configured to input or output a signal or data.

For example, when the communication apparatus 800 is an application function network element, the input/output interface 820 is configured to send first information to an access network device. The processor 810 is configured to perform service transmission by using a first QoS flow or a first PDU set.

For example, when the communication apparatus 800 is an access network device, the input/output interface 820 is configured to receive first information from an application function network element. The processor 810 is configured to perform service transmission by using a first QoS flow or a first PDU set.

In a possible implementation, the processor 810 executes instructions stored in a memory to implement a function implemented by the application function network element or the access network device.

Optionally, the communication apparatus 800 further includes the memory.

Optionally, the processor and the memory are integrated together.

Optionally, the memory is outside the communication apparatus 800.

In a possible implementation, the processor 810 may be a logic circuit, and the processor 810 inputs/outputs a message or signaling through the input/output interface 820. The logic circuit may be a signal processor, a chip, or another integrated circuit that can implement the methods in embodiments of this application.

The foregoing descriptions of the communication apparatus 800 are merely an example for description. The communication apparatus 800 can be configured to perform the methods described in the foregoing embodiments. For specific content, refer to the descriptions of the foregoing method embodiments. Details are not described herein again.

This application further provides a chip, including a processor, configured to invoke instructions from a memory and run the instructions stored in the memory, to enable a communication device on which the chip is installed to perform the methods in the foregoing examples.

This application further provides a chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or code.

This application further provides a processor, configured to couple to a memory, and configured to perform the methods and the functions related to the network device or the terminal device in any one of the foregoing embodiments.

This application provides a computer program product including instructions. When the computer program product runs on a computer, the method in the foregoing embodiments is implemented.

This application further provides a computer program. When the computer program is run on a computer, the method in the foregoing embodiments is implemented.

This application further provides a computer-readable storage medium. The computer-readable storage medium stores a computer program. When the computer program is executed by a computer, the method in the foregoing embodiments is implemented.

A person of ordinary skill in the art may be aware that the units and algorithm steps in each example described with reference to embodiments disclosed herein can be implemented in electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

A person skilled in the art can clearly understand that for convenient and brief description, for detailed working processes of the systems, apparatuses, and units described above, refer to the corresponding processes in the foregoing method embodiments. Details are not described herein again.

In several embodiments provided in this application, the disclosed systems, apparatuses, and methods may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the technical solutions in embodiments of this application.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in method embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of this application shall be subject to the protection scope of the claims.

## Claims

1. A communication method, comprising:
sending first information to an access network device;
receiving second information from the access network device, wherein
the first information indicates N quality of service QoS flows, the second information indicates M QoS flows, the M QoS flows belong to the N QoS flows, packet delay budgets PDBs corresponding to at least two of the N QoS flows are different, and/or bit rates corresponding to at least two of the N QoS flows are different; and performing service transmission based on a first QoS flow, wherein the first QoS flow belongs to the M QoS flows; or
the first information indicates N protocol data unit PDU sets, the second information indicates M PDU sets, the M PDU sets belong to the N PDU sets, and PDU set delay budgets PSDBs corresponding to at least two of the N PDU sets are different; and performing service transmission based on a first PDU set, wherein the first PDU set belongs to the M PDU sets; and
M is greater than or equal to 1, N is greater than or equal to M, and M and N are positive integers.

2. The method according to claim 1, wherein when M is greater than 1, the method further comprises:
receiving third information from the access network device, wherein the third information indicates a use order of the M QoS flows or the M PDU sets; and
performing service transmission based on the first QoS flow comprises: determining, based on the use order, to perform service transmission based on the first QoS flow; or
performing service transmission based on the first PDU set comprises: determining, based on the use order, to perform service transmission based on the first PDU set.

3. The method according to claim 1 or 2, further comprising:
receiving fourth information from the access network device, wherein the fourth information indicates an effective time of the first QoS flow or the first PDU set.

4. The method according to any one of claims 1 to 3, wherein each QoS flow comprises at least one PDU set, and each of the at least one PDU set corresponds to at least one piece of the following information:
a PSDB of the PDU set and importance of the PDU set.

5. The method according to claim 4, wherein when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold,
importance of at least one PDU set in the first QoS flow is greater than importance of a PDU set in the second QoS flow, and the second QoS flow is a QoS flow used for service transmission before the first QoS flow.

6. The method according to claim 4, wherein when a difference between a PSDB corresponding to the first PDU set and a PSDB corresponding to a second PDU set is greater than a third threshold,
importance of the first PDU set is greater than importance of the second PDU set, and the second PDU set is a PDU set used for service transmission before the first PDU set.

7. The method according to claim 5 or 6, further comprising:
receiving seventh information from the access network device, wherein the seventh information indicates at least one of the first threshold, the second threshold, and the third threshold.

8. A communication method, comprising:
receiving first information from an application function network element;
sending second information to the application function network element, wherein
the first information indicates N quality of service QoS flows, the second information indicates M QoS flows, the M QoS flows belong to the N QoS flows, packet delay budgets PDBs corresponding to at least two of the N QoS flows are different, and/or bit rates corresponding to at least two of the N QoS flows are different; and performing service transmission based on a first QoS flow, wherein the first QoS flow belongs to the M QoS flows; or
the first information indicates N protocol data unit PDU sets, the second information indicates M PDU sets, the M PDU sets belong to the N PDU sets, and PDU set delay budgets PSDBs corresponding to at least two of the N PDU sets are different; and performing service transmission based on a first PDU set, wherein the first PDU set belongs to the M PDU sets; and
M is greater than or equal to 1, N is greater than or equal to M, and M and N are positive integers.

9. The method according to claim 8, wherein when M is greater than 1, the method further comprises:
sending third information to the application function network element, wherein the third information indicates a use order of the M QoS flows or the M PDU sets.

10. The method according to claim 8 or 9, further comprising:
sending fourth information to the application function network element, wherein the fourth information indicates an effective time of the first QoS flow or the first PDU set.

11. The method according to any one of claims 8 to 10, wherein each QoS flow comprises at least one PDU set, and each of the at least one PDU set corresponds to at least one piece of the following information:
a PSDB of the PDU set and importance of the PDU set.

12. The method according to claim 11, wherein when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, the method further comprises:
sending fifth information to a core network element, wherein the fifth information indicates an increase in importance of at least one PDU set in the first QoS flow relative to importance of a PDU set in the second QoS flow, and the second QoS flow is a QoS flow used for service transmission before the first QoS flow.

13. The method according to claim 11, wherein when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold,
importance of at least one PDU set in the first QoS flow is greater than importance of a PDU set in the second QoS flow, and the second QoS flow is a QoS flow used for service transmission before the first QoS flow.

14. The method according to claim 11, wherein when a difference between a PSDB corresponding to the first PDU set and a PSDB corresponding to a second PDU set is greater than a third threshold, the method further comprises:
sending sixth information to a core network element, wherein the sixth information indicates an increase in importance of the first PDU set relative to importance of the second PDU set, and the second PDU set is a PDU set used for service transmission before the first PDU set.

15. The method according to claim 11, wherein when a difference between a PSDB corresponding to the first PDU set and a PSDB corresponding to a second PDU set is greater than a third threshold,
importance of the first PDU set is greater than importance of the second PDU set, and the second PDU set is a PDU set used for service transmission before the first PDU set.

16. A communication apparatus, wherein the apparatus comprises an interface unit, configured to send first information to an access network device, and the interface unit is further configured to receive second information from the access network device; and
the first information indicates N quality of service QoS flows, the second information indicates M QoS flows, the M QoS flows belong to the N QoS flows, packet delay budgets PDBs corresponding to at least two of the N QoS flows are different, and/or bit rates corresponding to at least two of the N QoS flows are different; and the apparatus further comprises a processing unit, configured to perform service transmission based on a first QoS flow, wherein the first QoS flow belongs to the M QoS flows; or
the first information indicates N protocol data unit PDU sets, the second information indicates M PDU sets, the M PDU sets belong to the N PDU sets, and PDU set delay budgets PSDBs corresponding to at least two of the N PDU sets are different; and the apparatus further comprises a processing unit, configured to perform service transmission based on a first PDU set, wherein the first PDU set belongs to the M PDU sets; and
M is greater than or equal to 1, N is greater than or equal to M, and M and N are positive integers.

17. The apparatus according to claim 16, wherein when M is greater than 1, the interface unit is further configured to receive third information from the access network device, and the third information indicates a use order of the M QoS flows or the M PDU sets; and
that the processing unit is configured to perform service transmission based on the first QoS flow comprises: the processing unit is configured to determine, based on the use order, to perform service transmission based on the first QoS flow; or
that the processing unit is configured to perform service transmission based on the first PDU set comprises: the processing unit is configured to determine, based on the use order, to perform service transmission based on the first PDU set.

18. The apparatus according to claim 16 or 17, wherein the interface unit is further configured to receive fourth information from the access network device, and the fourth information indicates an effective time of the first QoS flow or the first PDU set.

19. The apparatus according to any one of claims 16 to 18, wherein each QoS flow comprises at least one PDU set, and each of the at least one PDU set corresponds to at least one piece of the following information:
a PSDB of the PDU set and importance of the PDU set.

20. The apparatus according to claim 19, wherein when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold,
importance of at least one PDU set in the first QoS flow is greater than importance of a PDU set in the second QoS flow, and the second QoS flow is a QoS flow used for service transmission before the first QoS flow.

21. The apparatus according to claim 19, wherein when a difference between a PSDB corresponding to the first PDU set and a PSDB corresponding to a second PDU set is greater than a third threshold,
importance of the first PDU set is greater than importance of the second PDU set, and the second PDU set is a PDU set used for service transmission before the first PDU set.

22. The apparatus according to claim 20 or 21, wherein the interface unit is further configured to receive seventh information from the access network device, and the seventh information indicates at least one of the first threshold, the second threshold, and the third threshold.

23. A communication apparatus, wherein the apparatus comprises an interface unit, configured to receive first information from an application function network element, and the interface unit is further configured to send second information to the application function network element;
the first information indicates N quality of service QoS flows, the second information indicates M QoS flows, the M QoS flows belong to the N QoS flows, packet delay budgets PDBs corresponding to at least two of the N QoS flows are different, and/or bit rates corresponding to at least two of the N QoS flows are different; and the apparatus further comprises a processing unit, configured to perform service transmission based on a first QoS flow, wherein the first QoS flow belongs to the M QoS flows; or
the first information indicates N protocol data unit PDU sets, the second information indicates M PDU sets, the M PDU sets belong to the N PDU sets, and PDU set delay budgets PSDBs corresponding to at least two of the N PDU sets are different; and the apparatus further comprises a processing unit, configured to perform service transmission based on a first PDU set, wherein the first PDU set belongs to the M PDU sets; and
M is greater than or equal to 1, N is greater than or equal to M, and M and N are positive integers.

24. The apparatus according to claim 23, wherein when M is greater than 1, the interface unit is further configured to send third information to the application function network element, and the third information indicates a use order of the M QoS flows or the M PDU sets.

25. The apparatus according to claim 23 or 24, wherein the interface unit is further configured to send fourth information to the application function network element, and the fourth information indicates an effective time of the first QoS flow or the first PDU set.

26. The apparatus according to any one of claims 23 to 25, wherein each QoS flow comprises at least one PDU set, and each of the at least one PDU set corresponds to at least one piece of the following information:
a PSDB of the PDU set and importance of the PDU set.

27. The apparatus according to claim 26, wherein when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold, the interface unit is further configured to send fifth information to a core network element, the fifth information indicates an increase in importance of at least one PDU set in the first QoS flow relative to importance of a PDU set in the second QoS flow, and the second QoS flow is a QoS flow used for service transmission before the first QoS flow.

28. The apparatus according to claim 26, wherein when a difference between a PDB corresponding to the first QoS flow and a PDB corresponding to a second QoS flow is greater than a first threshold, and/or when a difference between a bit rate corresponding to the first QoS flow and a bit rate corresponding to the second QoS flow is greater than a second threshold,
importance of at least one PDU set in the first QoS flow is greater than importance of a PDU set in the second QoS flow, and the second QoS flow is a QoS flow used for service transmission before the first QoS flow.

29. The apparatus according to claim 26, wherein when a difference between a PSDB corresponding to the first PDU set and a PSDB corresponding to a second PDU set is greater than a third threshold, the interface unit is further configured to send sixth information to a core network element, the sixth information indicates an increase in importance of the first PDU set relative to importance of the second PDU set, and the second PDU set is a PDU set used for service transmission before the first PDU set.

30. The apparatus according to claim 26, wherein when a difference between a PSDB corresponding to the first PDU set and a PSDB corresponding to a second PDU set is greater than a third threshold,
importance of the first PDU set is greater than importance of the second PDU set, and the second PDU set is a PDU set used for service transmission before the first PDU set.

31. A communication apparatus, comprising at least one processor, wherein the at least one processor is configured to execute a computer program or instructions,
so that the communication apparatus performs the method according to any one of claims 1 to 7.

32. A communication apparatus, comprising at least one processor, wherein the at least one processor is configured to execute a computer program or instructions,
so that the communication apparatus performs the method according to any one of claims 8 to 15.

33. The communication apparatus according to claim 31 or 32, wherein the communication apparatus further comprises a memory, and the memory is configured to store the computer program or the instructions.

34. The communication apparatus according to claim 31 or 32, wherein the communication apparatus further comprises a communication interface, and the communication interface is configured to input a signal and/or output a signal.

35. A computer-readable storage medium, wherein the computer-readable storage medium stores a computer program or instructions, and when the computer program or the instructions are run on a computer,
the method according to any one of claims 1 to 7 is performed; or
the method according to any one of claims 8 to 15 is performed.

36. A computer program product, comprising instructions, wherein when the instructions are run on a computer,
the method according to any one of claims 1 to 7 is performed; or
the method according to any one of claims 8 to 15 is performed.

37. A communication system, wherein the communication system comprises an application function network element and/or an access network device, the application function network element is configured to perform the method according to any one of claims 1 to 7, and the access network device is configured to perform the method according to any one of claims 8 to 15.
